# EUROPEAN PATENT SPECIFICATION

(11) **EP 4 201 762 B1**
(45) Date of publication and mention of the grant of the patent: **19.02.2025**
(21) Application number: 22202397.0
(22) Date of filing: 19.10.2022
(51) Int. Cl.: B60T 8/175, B60W 30/09, B60W 30/182, B60W 50/14

(54) **VEHICLE CONTROL SYSTEM**
FAHRZEUGSTEUERUNGSSYSTEM
SYSTÈME DE COMMANDE DE VÉHICULE

(30) Priority: 24.12.2021 JP 2021210921
(43) Date of publication of application: 28.06.2023
(73) Proprietor: Suzuki Motor Corporation, Hamamatsu-shi, Shizuoka 432-8611 (JP)
(72) Inventor: AIZU, Hiroshi, HAMAMATSU-SHI, 432-8611 (JP)
(74) Representative: Plasseraud IP

(56) References cited:
- WO-A1-2014/027113
- WO-A1-90/08888
- DE-A1- 10 241 455
- GB-A- 2 523 323

## Description

### [Technical Field]

The present invention relates to a vehicle control system.

### [Background Art]

Patent Literature 1, for example, discloses a collision avoidance support system for performing intervention-control to avoid a collision with an obstacle in front as a conventional vehicle control system. In this collision avoidance support system, intervention-control based on a braking operation or intervention-control based on a steering operation is performed so as to avoid a collision with an obstacle in front according to the probability of collision with the obstacle in front. At this time, the timing for starting the intervention-control is determined based on the size of the obstacle occupying within an estimated course of the own vehicle, a relative speed with respect to the obstacle, and a road surface condition such as snow coverage. This makes it possible to suppress a driver's feeling of discomfort caused by an intervening operation without impairing safety. Patent Literature 2, for example, describes a speed control system for a vehicle. Patent Literature 3, for example, describes method and apparatus for controlling the speed of a vehicle.

### [Citation List]

### [Patent Literature]

[Patent Literature 1] JP 4909030 B2
[Patent Literature 2] WO 2014/027113 A1
[Patent Literature 3] DE 10241455 A1

### [Summary of Invention]

### [Problem to be Solved by the Invention]

In these circumstances, in a condition in which the frictional coefficient of a road surface is low, like on a snowy road or the like, especially at the time of starting a vehicle, the wheels slip (wheel spin) to sway the vehicle or steering control is lost, which may make it difficult for a driver unfamiliar with the road surface condition described above to step on the accelerator. A traction control device is known as a vehicle control mechanism for preventing wheel slip at the time of starting or accelerating, as described above.

In the traction control device, a driver selects a driving mode matching a road surface condition from a plurality of preset driving modes, and the torque of a drive device for the vehicle and the control of wheel brake are switched according to the driving mode. For example, at the time of starting the vehicle on a snowy road, the driver selects a driving mode (snow mode) suitable for the snowy road. In the snow mode, the intervention timing of the traction control is set to be earlier than that in a standard driving mode (normal mode), and the behavior of the vehicle is stabilized by suppressing the wheel slip. As a result, even when the driver's accelerator step-on amount at the time of starting the vehicle is too large, unnecessary wheel slip (wheel spin) can be suppressed.

However, a driver who steps on the accelerator by a large amount at the time of starting the vehicle is likely to increase the speed of the vehicle even while driving the vehicle on a snowy road, and tends to increase the possibility of collision with an obstacle in front. The above-mentioned conventional collision avoidance support system does not take into consideration the tendency of collision probability corresponding to the driving mode as described above, and there is room for improvement.

The present invention has been made by paying attention to the above points, and has an object to provide a vehicle control system capable of performing intervention-control at an appropriate timing in collision avoidance support including an alarm.

### [Means for Solving the Problem]

An aspect of the present invention to achieve the foregoing object provides a vehicle control system comprising a traction control device and a collision avoidance support device. The traction control device includes a driving mode switching unit capable of selecting one of a plurality of driving modes, and when a slip amount detected based on a rotation speed of a wheel exceeds a slip determination threshold value set according to a driving mode selected by the driving mode switching unit, the traction control device suppresses the slip by reducing a torque of a drive device of the vehicle and/or actuating a brake device of the wheel, thereby controlling traction. The collision avoidance support device includes an obstacle detection unit for detecting an obstacle, a calculation unit for determining a collision prediction time required for the vehicle to collide with the obstacle based on a relative distance and a relative speed between the obstacle detected by the obstacle detection unit and the vehicle, an alarm unit capable of outputting an alarm for notifying a probability of a collision with the obstacle to a driver of the vehicle, and an alarm control unit for causing the alarm unit to output the alarm when the collision prediction time determined by the calculation unit is equal to or less than an alarm determination threshold value. The alarm control unit is configured to be capable of changing setting of the alarm determination threshold value in conjunction with a driving mode selected by the driving mode switching unit.

### [Advantageous Effect of Invention]

According to the vehicle control system of the present invention, the alarm determination threshold value set in the alarm control unit is changed in conjunction with the driving mode selected by the driving mode switching unit, whereby an alarm for avoiding a collision with an obstacle can be output at a more appropriate timing.

### [Brief Description of Drawings]

[Figure 1] Figure 1 is a block diagram showing a functional configuration of a vehicle control system according to an embodiment of the present invention.
[Figure 2] Figure 2 is a flowchart showing a first example of collision avoidance control in the above embodiment.
[Figure 3] Figure 3 is a flowchart showing a second example of the collision avoidance control in the above embodiment.
[Figure 4] Figure 4 is a first half of a flowchart showing a third example of the collision avoidance control in the above embodiment.
[Figure 5] Figure 5 is a second half of a flowchart showing the third example of the collision avoidance control in the above embodiment.

### [Mode for Carrying Out the Invention]

Hereinafter, an embodiment of the present invention will be described in detail with reference to the accompanying drawings.

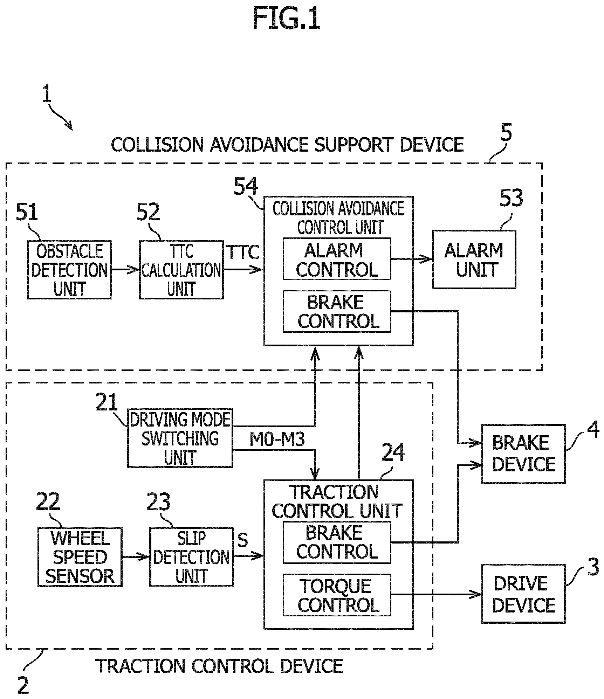

Figure 1 is a block diagram showing a functional configuration of a vehicle control system according to an embodiment of the present invention. In Figure 1, the vehicle control system 1 according to the present embodiment includes, for example, a traction control device 2 that controls traction in a vehicle such as an automobile, and a collision avoidance support device 5 that supports an operation for avoiding a collision between the vehicle and an obstacle.

The traction control device 2 is mounted in the control system 1 as a part of the function of a behavior stability control system (ESC) including anti-lock braking control (ABS) that suppresses the lock during braking. The traction control device 2 in the present embodiment includes, for example, a driving mode switching unit 21, a wheel speed sensor 22, a slip detection unit 23, and a traction control unit 24.

The driving mode switching unit 21 is configured to be capable of selecting one of a plurality of preset driving modes. Specifically, it is possible to use a momentary type or alternate type operation switch, a dial type operation switch, or the like as the driving mode switching unit 21. The driving mode switching unit 21 allows the driver of the vehicle to select a driving mode suitable for the road surface condition. The driving mode switching unit 21 outputs, to each of the traction control unit 24 and the collision avoidance support device 5, a signal indicating the driving mode selected by the driver.

The wheel speed sensor 22 is configured to be capable of detecting the rotation speed of each wheel (not shown) provided in the vehicle. The rotation speed of each wheel detected by the wheel speed sensor 22 is transmitted to the slip detection unit 23.

Based on the rotation speed of each wheel detected by the wheel speed sensor 22, the slip detection unit 23 detects a slip amount S of a wheel in which slip (wheel spin) occurs. Specifically, the slip detection unit 23 identifies a wheel (driving wheel) in which the slip occurs from the deviation in rotation speed among the respective wheels, and acquires the slip amount S by calculation. The slip amount S of the wheel detected by the slip detection unit 23 is transmitted to the traction control unit 24.

When the slip amount S detected by the slip detection unit 23 exceeds a slip determination threshold value Sth which is set according to the driving mode selected by the driving mode switching unit 21, the traction control unit 24 suppresses the slip to control the traction by reducing the torque of a drive device 3 of the vehicle and/or actuating a brake device 4 of the wheel. In the example shown here, a slip determination threshold value for the torque reduction and a slip determination threshold value for the actuation of the brake device 4 in traction control are a common value. However, they may be different values from each other. By such a traction control unit 24, the start timing and the control content of the intervention-control can be switched according to the driving mode selected by the driving mode switching unit 21.

Specifically, the traction control unit 24 can be configured by combining a power controller, which is a microcomputer, for executing torque control of the drive device 3, and a brake controller, which is a microcomputer, for executing brake control of the brake device 4. The power controller and the brake controller are configured by CPU, ROM, RAM, an input/output interface, and the like. Under the condition that the traction control is operated, a signal indicating that the traction control is operating is output from the traction control unit 24 to the collision avoidance support device 5.

The drive device 3 includes an internal combustion engine, an electric motor, and the like. The rotational energy generated in the drive device 3 is transmitted to the driving wheels of the vehicle via a power train (not shown). The brake device 4 is provided to each of the wheels of the vehicle.

Although not shown, the brake device 4 includes a brake (a disc brake, a drum brake, etc.) attached to the wheel, and a brake control unit connected to the brake via a hydraulic pipe. The brake control unit includes a braking operation unit including a brake pedal, a brake booster, a master cylinder, and the like, and a brake actuator for controlling hydraulic pressure according to a control signal from the brake controller. The brake actuator is configured by a pump and a driving motor for the pump which generate hydraulic pressure for brake control, a valve for performing switching from a hydraulic system on the braking operation unit side to a hydraulic system on the brake actuator side, and the like.

The collision avoidance support device 5 is a control device for providing a so-called autonomous emergency braking (AEB) function. The collision avoidance support device 5 in the present embodiment includes, for example, an obstacle detection unit 51, a TTC calculation unit 52, an alarm unit 53, and a collision avoidance control unit 54.

The obstacle detection unit 51 is configured to be capable of detecting an obstacle outside the vehicle and measuring the relative distance between the obstacle and the vehicle. Specifically, a millimeter wave radar, a camera, a sonar sensor, an ultrasonic sensor, LiDAR (Light Detection and Ranging), or the like can be used as the obstacle detection unit 51. The measurement of the relative distance by the obstacle detection unit 51 is dynamically executed in a predetermined measurement cycle. The obstacle detection unit 51 sequentially transmits the relative distance between the detected obstacle and the vehicle to the TTC calculation unit 52.

The TTC calculation unit 52 calculates the relative speed of the obstacle with respect to the vehicle by using the relative distance sequentially transmitted from the obstacle detection unit 51. This relative speed can be obtained as a change in relative distance per unit time. The TTC calculation unit 52 calculates a collision prediction time TTC (Time-To-Collision) required for the vehicle to collide with the obstacle based on the relative distance and the relative speed between the obstacle detected by the obstacle detection unit 51 and the vehicle. Specifically, the collision prediction time TTC can be determined as a value obtained by dividing the relative distance between the obstacle and the vehicle by the relative speed. The collision prediction time TTC calculated by the TTC calculation unit 52 is transmitted to the collision avoidance control unit 54. In the present embodiment, the TTC calculation unit 52 corresponds to a "calculation unit" of the present invention.

The alarm unit 53 is configured to be capable of outputting an alarm for notifying the driver of the vehicle of the possibility of a collision with an obstacle. This alarm issues a warning to the driver, for example, by a sound or a warning light, to promote collision avoidance by a braking operation. The timing at which the alarm unit 53 starts outputting an alarm is controlled by the collision avoidance control unit 54.

The collision avoidance control unit 54 is supplied with a signal indicating the driving mode selected by the driving mode switching unit 21 of the traction control device 2 described above and a signal indicating that the traction control is being operated, and the collision prediction time TTC calculated in the TTC calculation unit 52 is transmitted. When the collision prediction time TTC is equal to or less than an alarm determination threshold value Ath, the collision avoidance control unit 54 controls to output an alarm from the alarm unit 53. At this time, the alarm determination threshold value Ath set in the collision avoidance control unit 54 can be changed in conjunction with the driving mode selected by the driving mode switching unit 21. In other words, the collision avoidance control unit 54 controls the alarm unit 53 so that an alarm is output at a timing suitable for the driving mode selected by the driving mode switching unit 21.

Furthermore, the collision avoidance control unit 54 controls to automatically actuate the brake device 4 when the collision prediction time TTC is equal to or less than a brake determination threshold value Bth. At this time, the brake determination threshold value Bth set in the collision avoidance control unit 54 can also be changed in conjunction with the driving mode selected by the driving mode switching unit 21. However, the brake determination threshold value Bth is set to a value less than the alarm determination threshold value Ath, and the collision avoidance control is performed so that the brake device 4 automatically operates after an alarm is output from the alarm unit 53. In other words, the collision avoidance control unit 54 issues an alarm to the driver at a timing suitable for the driving mode selected by the driving mode switching unit 21 to promote collision avoidance by the braking operation, and furthermore, when there is no braking operation by the driver, which would cause a situation in which a collision with an obstacle is unavoidable, the collision avoidance control unit 54 controls the brake device 4 so that the brake is automatically (autonomously) operated in order to reduce the damage caused by the collision. In the present embodiment, the collision avoidance control unit 54 corresponds to "alarm control unit" and "brake control unit" of the present invention.

Here, the details of a plurality of driving modes to be switched by the driving mode switching unit 21, and the slip determination threshold value Sth, the alarm determination threshold value Ath, and the brake determination threshold value which are set in accordance with the driving mode selected by the driving mode switching unit 21 will be described in detail by presenting specific examples.

In the vehicle control system 1 according to the present embodiment, for example, four types of driving modes of "normal mode", "snow mode", "lock mode" and "sport mode" are preset. In the present embodiment, the snow mode corresponds to the "first driving mode" of the present invention, and the "lock mode" corresponds to the "second driving mode" of the present invention.

The normal mode M0 is a standard driving mode. In the normal mode M0, the slip determination threshold value Sth of the traction control unit 24 is set to an initial value Sth0, and the content of the traction control (a torque reduction amount of the drive device 3, braking force of the brake device 4, etc.) are set to an initial state.

The snow mode M1 is a driving mode suitable for driving on a slippery road surface such as a snowy road. In the snow mode M1, a slip determination threshold value Sth1 (first slip determination threshold value) less than the initial value Sth0 to be set in the normal mode M0 is set (Sth1<Sth0), so that the intervention timing of the traction control is set to be earlier than that in the normal mode M0. Note that the content of the traction control in the snow mode M1 is the same as that in the normal mode M0. In the traction control of the snow mode M1, the behavior of the vehicle is stabilized by suppressing the slip of the wheels in a slippery road surface condition such as a snowy road.

The lock mode M2 is a driving mode suitable for escaping from an unmovable situation (stuck) because wheels are held by mud, sand, snowy roads, or the like. In the lock mode M2, a slip determination threshold value Sth2 (second slip determination threshold value) greater than the initial value Sth0 to be set in the normal mode M0 is set (Sth2>Sth0>Sth1), so that the intervention timing of the traction control is set to be later than that in the normal mode M0. On the other hand, the intervention timing of the brake LSD (Limited Slip Differential) function has been advanced. The brake LSD function is a function of braking one driving wheel being slipping (wheel spin) to secure the drive torque of the other driving wheel. In the traction control including the brake LSD function in the lock mode M2, emergency escape from being stuck is supported. Such traction control similar to the lock mode M2 is also effective in a case in which the vehicle is started from a situation in which the drive torque is not transmitted to the driving wheels, which is represented by the diagonal wheel floating of the vehicle, and the driving mode corresponding to this is sometimes called "grip control mode".

The sport mode M3 is a driving mode suitable for driving while prioritizing a driver's intention. In the sport mode M3, a slip determination threshold value Sth3 greater than the initial value Sth0 to be set in the normal mode M0 is set (Sth3>Sth0>Sth1), and the intervention timing of the traction control is set to be later than that in the normal mode M0. The content of traction control is set by setting exclusive to the sport mode. In the traction control of the sport mode M3, the degree of freedom of behavior control by the driver is expanded by allowing the wheel slip.

In the vehicle control system 1 according to the present embodiment, one of the above four types of driving modes is selected by the driver's operation on the driving mode switching unit 21. In conjunction with the selected driving mode, the alarm determination threshold value Ath and the brake determination threshold value Bth to be set in the collision avoidance control unit 54 of the collision avoidance support device 5 are changed.

Specifically, when the normal mode M0 is selected by the driving mode switching unit 21, the alarm determination threshold value Ath of the collision avoidance control unit 54 is set to the initial value Ath0, and the brake determination threshold value Bth is set to the initial value Bth0. The initial value Bth0 of the brake determination threshold value is less than the initial value Ath0 of the alarm determination threshold value (Bth0<Ath0). Under the collision avoidance control in the normal mode M0, an alarm is output from the alarm unit 53 when the collision prediction time TTC is equal to or less than the initial value Ath0 of the alarm determination threshold value, and the brake device 4 automatically operates to avoid a collision with an obstacle or reduce collision damage when the collision prediction time TTC is equal to or less than the initial value Bth0 of the brake determination threshold value. In other words, in the collision avoidance control by the collision avoidance support device 5, an alarm for prompting the driver to perform a collision avoidance operation is output before the automatic braking operates. The difference between the alarm determination threshold value and the brake determination threshold value (Ath0-Bth0) corresponds to the time from the output of the alarm to the start of automatic braking (for example, 0.8 seconds).

When the snow mode M1 (first driving mode) is selected by the driving mode switching unit 21, with respect to the alarm determination threshold value Ath, an alarm determination threshold value Ath1 (first alarm determination threshold value) greater than the initial value Ath0 to be set in the normal mode M0 is set (Ath1>Ath0). Furthermore, with respect to the brake determination threshold value Bth, a brake determination threshold value Bth1 (first brake determination threshold value) greater than the initial value Bth0 to be set in the normal mode M0 is set (Bth1>Bth0). However, the brake determination threshold value Bth1 is less than the alarm determination threshold value Ath1 (Bth1<Ath1). As a result, under the collision avoidance control in the snow mode M1, the output of an alarm from the alarm unit 53 and the automatic braking by the brake device 4 are started at a timing earlier than that in the normal mode M0.

When the lock mode M2 (second driving mode) is selected by the driving mode switching unit 21, with respect to the alarm determination threshold value Ath, an alarm determination threshold value Ath2 (second alarm determination threshold value) greater than the initial value Ath0 to be set in the normal mode M0 is set (Ath2>Ath0). With respect to the relationship in magnitude with the alarm determination threshold value Ath1 to be set in the snow mode M1 described above, the alarm determination threshold value Ath1 in the snow mode M1 is greater than the alarm determination threshold value Ath2 in the lock mode M2 (Ath1>Ath2>Ath0). Furthermore, with respect to the brake determination threshold value Bth, a brake determination threshold value Bth2 (second brake determination threshold value) which is equal to the initial value Bth0 to be set in the normal mode M0 is set (Bth2=Bth0). With respect to the relationship in magnitude with the brake determination threshold value Bth1 to be set in the snow mode M1 described above, the brake determination threshold value Bth1 in the snow mode M1 is greater than the brake determination threshold value Bth2 in the lock mode M2 (Bth1>Bth2=Bth0). However, the brake determination threshold value Bth2 is less than the alarm determination threshold value Ath2 (Bth2<Ath2). As a result, under the collision avoidance control in the lock mode M2, the output of an alarm from the alarm unit 53 is started at a timing which is earlier than that in the normal mode M0 and later than that in the snow mode M1, and the automatic braking by the brake device 4 is started at the same timing as the normal mode M0.

When the sport mode M3 is selected by the driving mode switching unit 21, with respect to the alarm determination threshold value Ath, an alarm determination threshold value Ath3 which is equal to the initial value Ath0 to be set in the normal mode M0 is set (Ath3=Ath0). In other words, the relationship in magnitude among the alarm determination threshold values Ath0 to Ath3 corresponding to the four types of driving modes respectively satisfies Ath1>Ath2>Ath0=Ath3. Furthermore, with respect to the brake determination threshold value Bth, a brake determination threshold value Bth3 which is equal to the initial value Bth0 to be set in the normal mode M0 is set (Bth3=Bth0). In other words, the relationship in magnitude among the brake determination threshold values Bth0 to Bth3 corresponding to the four types of driving modes respectively satisfies Bth1>Bth0=Bth2=Bth3. As a result, under the collision avoidance control in the sport mode M3, the output of an alarm from the alarm unit 53 is started at a timing later than that in the lock mode M2, and the automatic braking by the brake device 4 is started at the same timing as the normal mode M0.

Next, the operation of the vehicle control system 1 according to the present embodiment will be described in detail while focusing on the collision avoidance control to be executed by the collision avoidance support device 5.

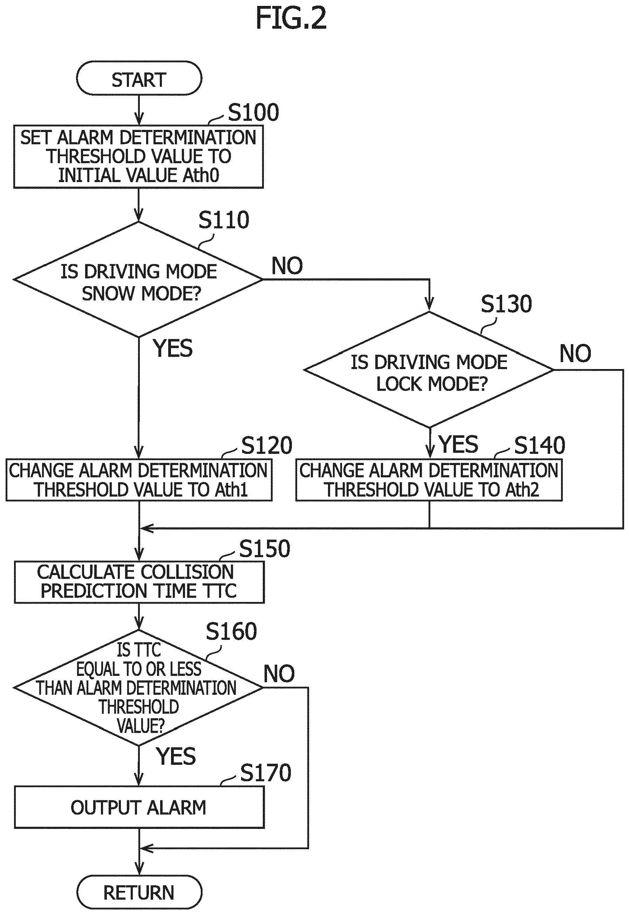

Figure 2 is a flowchart showing a first example of the collision avoidance control in the present embodiment. In the first example, a case in which the alarm control out of the alarm control and the brake control is performed in conjunction with the driving mode will be described as the collision avoidance control by the collision avoidance support device 5. As for the brake control in the first example, the same control as in the conventional case is performed, and thus, the description thereof is omitted here.

In the first example of the collision avoidance control in the present embodiment, when the vehicle control system 1 is actuated, first, in step S100 of Figure 2, the alarm determination threshold value is set to the initial value Ath0 by the collision avoidance control unit 54 of the collision avoidance support device 5. At this time, in the collision avoidance support device 5, an output signal from the driving mode switching unit 21 of the traction control device 2 is input to the collision avoidance control unit 54, and a detection result of the obstacle detection unit 51 is transmitted to the TTC calculation unit 52.

In the subsequent step S110, it is determined by the collision avoidance control unit 54 whether the driving mode selected by the driving mode switching unit 21 is the snow mode M1 (first driving mode). If the driving mode is the snow mode M1 (YES), the processing proceeds to the next step S120, and if the driving mode is not the snow mode M1 (NO), the processing proceeds to the step S130.

In step S120, the collision avoidance control unit 54 changes the alarm determination threshold value from the initial value Ath0 to the alarm determination threshold value Ath1 corresponding to the snow mode M1. The alarm determination threshold value Ath1 is greater than the initial value Ath0 (Ath1>Ath0). When the change to the alarm determination threshold value Ath1 is completed, the processing proceeds to step S150.

In step S130, it is determined by the collision avoidance control unit 54 whether the driving mode selected by the driving mode switching unit 21 is the lock mode M2 (second driving mode). If the driving mode is the lock mode M2 (YES), the processing proceeds to the next step S140, and if the driving mode is not the lock mode M2 (NO), the processing proceeds to step S150.

In step S140, the collision avoidance control unit 54 changes the alarm determination threshold value from the initial value Ath0 to the alarm determination threshold value Ath2 corresponding to the lock mode M2. The alarm determination threshold value Ath2 is greater than the initial value Ath0 and less than the alarm determination threshold value Ath1 corresponding to the snow mode M1 (Ath1>Ath2>Ath0). When the change to the alarm determination threshold value Ath2 is completed, the processing proceeds to step S150.

In step S150, the TTC calculation unit 52 calculates the relative speed of the obstacle with respect to the vehicle by using the relative distance between the obstacle detected by the obstacle detection unit 51 and the vehicle, and divides the relative distance by the relative speed to determine the collision prediction time TTC. When the collision prediction time TTC calculated by the TTC calculation unit 52 is transmitted to the collision avoidance control unit 54, the processing proceeds to the next step S160.

In step S160, it is determined by the collision avoidance control unit 54 whether the collision prediction time TTC is equal to or less than the alarm determination threshold value corresponding to the driving mode. Specifically, when the snow mode M1 is selected by the driving mode switching unit 21, it is determined whether the collision prediction time TTC is equal to or less than the alarm determination threshold value Ath1, when the lock mode M2 is selected, it is determined whether the collision prediction time TTC is equal to or less than the alarm determination threshold value Ath2, and when the normal mode M0 or the sport mode M3 is selected, it is determined whether the collision prediction time TTC is equal to or less than the initial value Ath0 of the alarm determination threshold value.

When the collision prediction time TTC is equal to or less than the alarm determination threshold value (YES), in the next step S170, the alarm unit 53 is controlled by the collision avoidance control unit 54 so that an alarm notifying the driver of the possibility of collision with an obstacle is output. When the output of the alarm from the alarm unit 53 is started, or when the collision prediction time TTC is greater than the alarm determination threshold value Ath (NO in step S160), the processing returns to step S100, and the above series of processing is repeated.

By performing the collision avoidance control according to the first example as described above in the collision avoidance support device 5, an alarm for avoiding a collision with an obstacle can be output at a more appropriate timing. For example, as described above, in a situation in which the frictional coefficient of the road surface is low like on a snowy road or the like, the wheels slip (wheel spin) particularly at the time of starting the vehicle, so that the vehicle sways or steering control is lost, so a driver who is unfamiliar with the road surface condition described above may have difficulty in stepping on the accelerator. In order to deal with such a situation, the driver can suppress wheel slip at the time of starting the vehicle and accelerating the vehicle by selecting the snow mode M1 in the driving mode switching unit 21 and advancing the intervention timing of the traction control.

When an operation of selecting the snow mode M1 is performed by the driving mode switching unit 21, it is highly probable that the frictional coefficient of a road surface on which the vehicle travels will be lower than that of a dry road surface. Furthermore, in a situation in which the snow mode M1 is selected, there is a high probability that the driver will step on the accelerator more than usual. In other words, even under a slippery road surface condition, traction control stabilizes vehicle behavior, which makes it easier to increase speed. In the collision avoidance control of the present embodiment, attention is paid to such a tendency of the snow mode M1, and when the snow mode M1 is selected by the driving mode switching unit 21, the timing at which an alarm is output from the alarm unit 53 is set to be earlier than that when the normal mode M0 or the sport mode M3 is selected. As a result, the driver can be prompted to perform the braking operation at an early stage, and the probability of avoiding a collision with an obstacle is increased.

Furthermore, when the lock mode M2 is selected by the driving mode switching unit 21, it is assumed that the driver will step on the accelerator in order to escape from being stuck. In this case, after escaping from being stuck, the speed may unexpectedly increase, which may cause the vehicle to collide with an obstacle. Therefore, even when the lock mode M2 is selected by the driving mode switching unit 21, the timing at which an alarm is output from the alarm unit 53 is set to be earlier than that when the normal mode M0 or the sport mode M3 is selected. As a result, it is possible to prompt the driver to perform the braking operation at an early stage, so that it is possible to increase the possibility of avoiding a collision with an obstacle.

Comparing the case in which the snow mode M1 is selected with the case in which the lock mode M2 is selected by the driving mode switching unit 21, the frictional coefficient of the road surface in the snow mode M1 is supposed to be lower than the frictional coefficient of the road surface in the lock mode M2. Therefore, when the snow mode M1 is selected, the timing at which an alarm is output from the alarm unit 53 is set to be earlier than that when the lock mode M2 is selected, so that the probability of avoiding collision with an obstacle can be enhanced.

Next, a second example of the collision avoidance control in the present embodiment will be described.

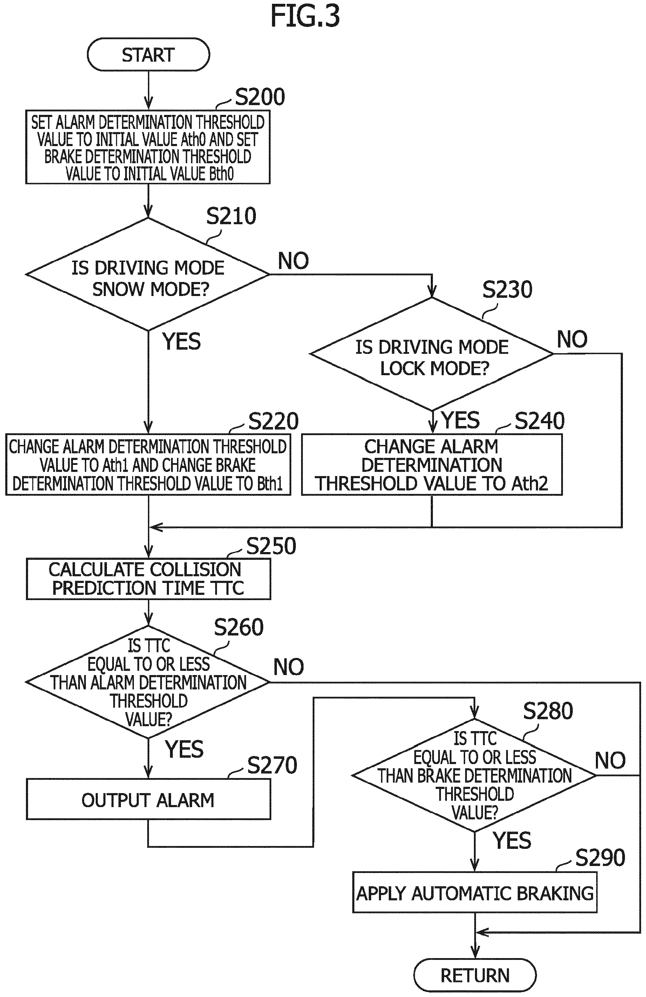

Figure 3 is a flowchart showing the second example of the collision avoidance control in the present embodiment. In the second example, a case in which both the alarm control and the brake control are performed in conjunction with the driving mode will be described as the collision avoidance control by the collision avoidance support device 5.

In the second example of the collision avoidance control in the present embodiment, when the vehicle control system 1 is actuated, first, in step S200 of Figure 3, the collision avoidance control unit 54 of the collision avoidance support device 5 sets an alarm determination threshold value to the initial value Ath0, and sets a brake determination threshold value to the initial value Bth0. At this time, in the collision avoidance support device 5, an output signal from the driving mode switching unit 21 of the traction control device 2 is input to the collision avoidance control unit 54, and a detection result of the obstacle detection unit 51 is transmitted to the TTC calculation unit 52.

In the subsequent step S210, it is determined by the collision avoidance control unit 54 whether the driving mode selected by the driving mode switching unit 21 is the snow mode M1. If the driving mode is the snow mode M1 (YES), the processing proceeds to the next step S220, and if the driving mode is not the snow mode M1 (NO), the processing proceeds to the next step S230.

In step S220, the collision avoidance control unit 54 changes the alarm determination threshold value from the initial value Ath0 to the alarm determination threshold value Ath1 corresponding to the snow mode M1, and changes the brake determination threshold value from the initial value Bth0 to the brake determination threshold value Bth1 corresponding to the snow mode M1. The alarm determination threshold value Ath1 is greater than the initial value Ath0 (Ath1>Ath0), and the brake determination threshold value Bth1 is greater than the initial value Bth0 (Bth1>Bth0). Furthermore, the brake determination threshold value Bth1 is less than the alarm determination threshold value Ath1 (Bth1<Ath1). When the change to the alarm determination threshold value Ath1 and the brake determination threshold value Bth1 is completed, the processing proceeds to step S250.

In step S230, it is determined by the collision avoidance control unit 54 whether the driving mode selected by the driving mode switching unit 21 is the lock mode M2. If the driving mode is the lock mode M2 (YES), the processing proceeds to the next step S240, and if the driving mode is not the lock mode M2 (NO), the processing proceeds to step S250.

In step S240, the collision avoidance control unit 54 changes the alarm determination threshold value from the initial value Ath0 to the alarm determination threshold value Ath2 corresponding to the lock mode M2. The alarm determination threshold value Ath2 is greater than the initial value Ath0 and less than the alarm determination threshold value Ath1 corresponding to the snow mode M1 (Ath1>Ath2>Ath0). The brake determination threshold value Bth2 corresponding to the lock mode M2 is equal to the initial value Bth0, that is, the initial value Bth0 is maintained (Bth2=Bth0). The brake determination threshold value Bth2 is less than the alarm determination threshold value Ath2 (Bth2=Bth0<Ath2). When the change to the alarm determination threshold value Ath2 is completed, the processing proceeds to step S250.

In steps S250 to S270, the collision prediction time TTC is calculated by the TTC calculation unit 52 and transmitted to the collision avoidance control unit 54 in the same manner as in steps S150 to S170 of the first example described above (step S250), and it is determined by the collision avoidance control unit 54 whether the collision prediction time TTC is equal to or less than the alarm determination threshold value corresponding to the driving mode (step S260). When the collision prediction time TTC is equal to or less than the alarm determination threshold value, the collision avoidance control unit 54 controls the alarm unit 53 to output an alarm from the alarm unit 53 (step S270). When the output of the alarm is started, the processing proceeds to the next step S280. On the other hand, when the collision prediction time TTC is greater than the alarm determination threshold value (NO in step S260), the processing returns to step S200 and the above series of processing is repeated.

In the subsequent step S280, it is determined by the collision avoidance control unit 54 whether the collision prediction time TTC is equal to or less than the brake determination threshold value corresponding to the driving mode. Specifically, when the snow mode M1 is selected by the driving mode switching unit 21, it is determined whether the collision prediction time TTC is equal to or less than the brake determination threshold value Bth1, and when the normal mode M0, the lock mode M2 or the sport mode M3 is selected, it is determined whether the collision prediction time TTC is equal to or less than the initial value Bth0 (=Bth2, Bth3) of the brake determination threshold value.

When the collision prediction time TTC is equal to or less than the brake determination threshold value (YES), in the next step S290, the collision avoidance control unit 54 controls the brake device 4 so that brake automatically (autonomously) operates in order to reduce the collision damage. When the automatic braking is applied by the brake device 4, or when the collision prediction time TTC is greater than the brake determination threshold value (NO in step S280), the processing returns to step S200 and the above series of processing is repeated.

By performing the collision avoidance control according to the second example as described above in the collision avoidance support device 5, an alarm for avoiding a collision with an obstacle can be output at an appropriate timing as in the case of the first example described above, and in addition, automatic braking operates at an appropriate timing matching the driving mode selected by the driving mode switching unit 21 when the vehicle falls into a situation in which no braking operation is performed by the driver and would cause a collision with an obstacle is unavoidable, whereby collision damage can be reduced.

Specifically, when the snow mode M1 is selected by the driving mode switching unit 21, it is possible to effectively reduce the damage of a collision with an obstacle by applying automatic braking early in a situation in which the driver steps on the accelerator on a snowy road or the like. Furthermore, since the stopping distance of the vehicle being traveling is extended on a snowy road or the like, the extended distance can be compensated with the early automatic braking by the collision avoidance support device 5.

On the other hand, when the lock mode M2 is selected by the driving mode switching unit 21, the collision avoidance control is set to be performed in a situation in which the driver tries to escape from being stuck, so that it is predicted that the probability of greatly stepping on the accelerator after the escape is low. For this reason, the output of an alarm is executed early to promote the driver to perform the braking operation, and the timing of automatic braking is set to be the same as in the normal mode M0 to implement control that emphasizes collision avoidance by the driver's braking operation, which makes it possible to reduce the damage caused by a collision with an obstacle while suppressing the driver's discomfort.

Next, a third example of the collision avoidance control in the present embodiment will be described.

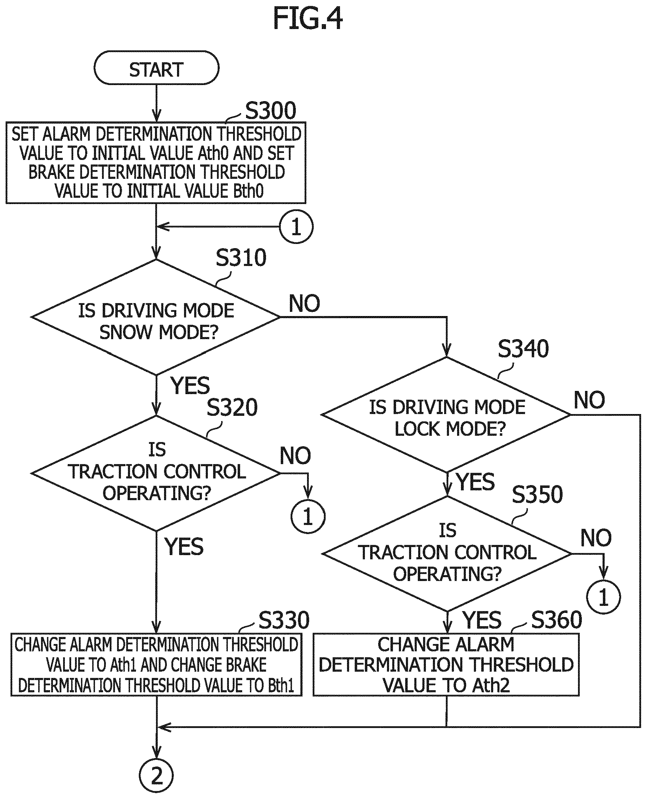

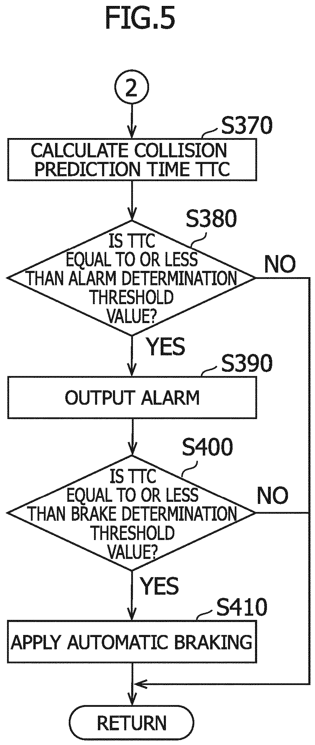

Figures 4 and 5 are flowcharts showing a third example of the collision avoidance control in the present embodiment. In the third example, a case in which the collision avoidance control (alarm control and automatic braking control) in conjunction with the driving mode by the collision avoidance support device 5 is performed only during the operation of the traction control will be described.

In the third example of the collision avoidance control in the present embodiment, when the vehicle control system 1 is actuated, first, in step S300 and step S310 of Figure 4, the alarm determination threshold value and the brake determination threshold value are set to the initial values Ath0 and Bth0 in the same manner as in step S200 and step S210 of the second example described above (step S300), and it is determined whether the driving mode selected by the driving mode switching unit 21 is the snow mode M1 (step S310). If the driving mode is the snow mode M1 (YES), the processing proceeds to the next step S320, and if the driving mode is not the snow mode M1 (NO), the processing proceeds to the step S340.

In step S320, it is determined by the collision avoidance control unit 54 whether the traction control is being activated by using the output signal from the traction control unit 24. When the traction control is being activated, that is, when the slip amount S detected by the slip detection unit 23 exceeds the slip determination threshold value and the traction control of reducing the torque of the drive device 3 and/or operating the brake device 4 is performed (YES), the processing proceeds to the next step S330. On the other hand, when the traction control does not operate, the processing returns to step S310 to repeat the determination of the snow mode M1.

In step S330, in the same manner as in step S220 of the second example described above, the collision avoidance control unit 54 changes the alarm determination threshold value from the initial value Ath0 to the alarm determination threshold value Ath1 corresponding to the snow mode M1, and changes the brake determination threshold value from the initial value Bth0 to the brake determination threshold value Bth1 corresponding to the snow mode M1. When the change to the alarm determination threshold value Ath1 and the brake determination threshold value Bth1 is completed, the processing proceeds to step S370 (Figure 5).

In step S340, it is determined by the collision avoidance control unit 54 whether the driving mode selected by the driving mode switching unit 21 is the lock mode M2. If the driving mode is the lock mode M2 (YES), the processing proceeds to the next step S350, and if the driving mode is not the lock mode M2 (NO), the processing proceeds to step S370 (Figure 5).

In step S350, in the same manner as in the above step S320, it is determined by the collision avoidance control unit 54 whether the traction control is operating. If the traction control is operating (YES), the processing proceeds to the next step S360, and if the traction control is not operating, the processing returns to the step S310 to repeat the determination of the driving mode.

In step S360, in the same manner as in step S240 of the second example described above, the collision avoidance control unit 54 changes the alarm determination threshold value from the initial value Ath0 to the alarm determination threshold value Ath2 corresponding to the lock mode M2, and with respect to the brake determination threshold value, the initial value Bth0 is maintained. When the change to the alarm determination threshold value Ath2 is completed, the processing proceeds to step S370 (Figure 5).

In steps S370 to S410 of Figure 5, the same processing as in the steps S250 to S290 of the second example described above is executed. In other words, the collision prediction time TTC is determined by the TTC calculation unit 52, it is transmitted to the collision avoidance control unit 54 (step S370), and it is determined by the collision avoidance control unit 54 whether the collision prediction time TTC is equal to or less than the alarm determination threshold value corresponding to the driving mode (step S380). If the collision prediction time TTC is equal to or less than the alarm determination threshold value, an alarm is output from the alarm unit 53 (step S390). Then, it is determined by the collision avoidance control unit 54 whether the collision prediction time TTC is equal to or less than the brake determination threshold value corresponding to the driving mode (step S400). If the collision prediction time TTC is equal to or less than the brake determination threshold value, automatic braking is applied (step S410).

By performing the collision avoidance control according to the third example as described above in the collision avoidance support device 5, in addition to the achievement of the same action and effect as in the case of the second example described above, the alarm determination threshold value and the brake determination threshold value are changed in conjunction with the driving mode selected by the driving mode switching unit 21 to perform the collision avoidance control only when the traction control is in operation. Therefore, it is possible to prevent the intervention timing of the collision avoidance control to be switched in a situation in which the change of the alarm determination threshold value and the brake determination threshold value is unnecessary, such as in a case in which the driver mistakenly operates the driving mode switching unit 21. As a result, the collision avoidance control can be performed at a more appropriate timing.

In the third example of the collision avoidance control, an example in which the collision avoidance control is executed only when the traction control is operating has been described. However, the collision avoidance control may be executed only during the operation of the traction control and until a predetermined time has elapsed after the operation of the traction control. The predetermined time can be set to, for example, 1 to 2 seconds. As a result, it is possible to stably perform collision avoidance control even in a situation in which the operation and stop of the traction control are frequently switched with each other.

Although the embodiments of the present invention have been described above, the present invention is not limited to the above-described embodiment, and various modifications and changes can be made within the scope of the present invention, as defined by the appended claims. For example, in the above-described embodiment, an example in which four types of driving modes are switched by the driving mode switching unit 21 has been described, but the present invention is effective when two or more types of driving modes are switched.

Furthermore, in the above-described embodiment, an example in which the collision prediction time TTC is calculated based on the detection result of the obstacle detection unit 51 to perform the collision avoidance control has been described. However, the collision avoidance control may be performed in considering of a detection result of a yaw rate sensor, a steering angle sensor or the like in addition to the obstacle detection unit 51.

Furthermore, in the above-described embodiment, an example in which the first alarm determination threshold value Ath1 corresponding to the snow mode M1 (first driving mode) is greater than the second alarm determination threshold value corresponding to the lock mode M2 (second driving mode) has been described. However, it is also possible to set the first and second alarm determination threshold values to the same value.

### [Reference Signs List]

1 ... Vehicle control system
2 ... Traction control device
3 ... Drive device
4 ... Brake device
5 ... Collision avoidance support device
21 ... Driving mode switching unit
22 ... Wheel speed sensor
23 ... Slip detection unit
24 ... Traction control unit
51 ... Obstacle detection unit
52 ... TTC calculation unit (calculation unit)
53 ... Alarm unit
54 ... Collision avoidance control unit
Ath, Ath0 to Ath3 ... Alarm determination threshold value
Bth, Bth0 to Bth3 ... Brake determination threshold value
M0 ... normal mode
M1 ... Snow mode (first driving mode)
M2 ... Lock mode (second driving mode)
M3 ... Sport mode
S ... Slip amount
Sth, Sth0 to Sth3 ... Slip determination threshold value
TTC ... Collision prediction time

## Claims

1. A vehicle control system (1) comprising:
a traction control device (2) including a driving mode switching unit (21) capable of selecting one of a plurality of driving modes, wherein when a slip amount (S) detected based on a rotation speed of a wheel exceeds a slip determination threshold value (Sth) set according to a driving mode selected by the driving mode switching unit (21), the traction control device (2) suppresses the slip by reducing a torque of a drive device (3) of the vehicle and/or actuating a brake device (4) of the wheel, thereby controlling traction; and
a collision avoidance support device (5) including an obstacle detection unit (51) for detecting an obstacle, a calculation unit (52) for determining a collision prediction time (TTC) required for the vehicle to collide with the obstacle based on a relative distance and a relative speed between the obstacle detected by the obstacle detection unit (51) and the vehicle, an alarm unit (53) capable of outputting an alarm for notifying a possibility of a collision with the obstacle to a driver of the vehicle, and an alarm control unit (54) for causing the alarm unit (53) to output the alarm when the collision prediction time (TTC) determined by the calculation unit (52) is equal to or less than an alarm determination threshold value (Ath), **characterized in that**
the alarm control unit (54) is configured to be capable of changing setting of the alarm determination threshold value (Ath) in conjunction with a driving mode selected by the driving mode switching unit (21).

2. The vehicle control system (1) according to claim 1,
wherein the plurality of driving modes includes a first driving mode (M1),
wherein in the traction control device (2), a first slip determination threshold value (Sth1) is set when the first driving mode (M1) is selected by the driving mode switching unit (21), and the first slip determination threshold value (Sth1) is less than another slip determination threshold value which is set when another driving mode is selected by the driving mode switching unit (21), and
wherein in the alarm control unit (54), a first alarm determination threshold value (Ath1) is set when the first driving mode (M1) is selected by the driving mode switching unit (21), and the first alarm determination threshold value (Ath1) is greater than another alarm determination threshold value which is set when another driving mode is selected by the driving mode switching unit (21).

3. The vehicle control system (1) according to claim 1,
wherein the plurality of driving modes includes a second driving mode (M2),
wherein the traction control device (2) is configured so that a second slip determination threshold value (Sth2) is set when the second driving mode (M2) is selected by the driving mode switching unit (21), and when the slip amount (S) exceeds the second slip determination threshold value (Sth2), reduction of a torque of the drive device (3) is suppressed or prohibited, and braking force acting on the wheel is increased to adjust traction, and
wherein in the alarm control unit (54), a second alarm determination threshold value (Ath2) is set when the second driving mode (M2) is selected by the driving mode switching unit (21), and the second alarm determination threshold value (Ath2) is greater than another alarm determination threshold value which is set when another driving mode is selected by the driving mode switching unit (21).

4. The vehicle control system (1) according to claim 1,
wherein the plurality of driving modes includes a first driving mode (M1) and a second driving mode (M2) different from the first driving mode (M1),
wherein the traction control device (2) is configured so that a first slip determination threshold value (Sth1) is set when the first driving mode (M1) is selected by the driving mode switching unit (21), a second slip determination threshold value (Sth2) is set when the second driving mode (M2) is selected by the driving mode switching unit (21), the first slip determination threshold value (Sth1) is less than the second slip determination threshold value (Sth2), and when the slip amount (S) exceeds the second slip determination threshold value (Sth2), reduction of a torque of the drive device (3) is suppressed or prohibited, and braking force acting on the wheel is increased to adjust traction, and
wherein in the alarm control unit (54), a first alarm determination threshold value (Ath1) is set when the first driving mode (M1) is selected by the driving mode switching unit (21), and a second alarm determination threshold value (Ath2) is set when the second driving mode (M2) is selected by the driving mode switching unit (21).

5. The vehicle control system (1) according to claim 4, wherein the first alarm determination threshold value (Ath1) is greater than the second alarm determination threshold value (Ath2).

6. The vehicle control system (1) according to any one of claims 1 to 5,
wherein the collision avoidance support device (5) comprises a brake control unit (54) for actuating the brake device (4) when the collision prediction time (TTC) determined by the calculation unit (52) is equal to or less than a brake determination threshold value (Bth),
wherein the plurality of driving modes includes a first driving mode (M1),
wherein in the traction control device (2), a first slip determination threshold value (Sth1) is set when the first driving mode (M1) is selected by the driving mode switching unit (21), and the first slip determination threshold value (Sth1) is less than another slip determination threshold value which is set when another driving mode is selected by the driving mode switching unit (21), and
wherein in the brake control unit (54), a first brake determination threshold value (Bth1) is set when the first driving mode (M1) is selected by the driving mode switching unit (21), and the first brake determination threshold value (Bth1) is greater than another brake determination threshold value which is set when another driving mode is selected by the driving mode switching unit (21).

7. The vehicle control system (1) according to any one of claims 1 to 5,
wherein the collision avoidance support device (5) comprises a brake control unit (54) for actuating the brake device (4) when the collision prediction time (TTC) determined by the calculation unit (52) is equal to or less than a brake determination threshold value (Bth),
wherein the plurality of driving modes includes a first driving mode (M1) and a second driving mode (M2) different from the first driving mode (M1),
wherein the traction control device (2) is configured so that a first slip determination threshold value (Sth1) is set when the first driving mode (M1) is selected by the driving mode switching unit (21), a second slip determination threshold value (Sth2) is set when the second driving mode (M2) is selected by the driving mode switching unit (21), the first slip determination threshold value (Sth1) is less than the second slip determination threshold value (Sth2), and when the slip amount (S) exceeds the second slip determination threshold value (Sth2), reduction of a torque of the drive device (3) is suppressed or prohibited, and braking force acting on the wheel is increased to adjust traction, and
wherein in the brake control unit (54), a first brake determination threshold value (Bth1) is set when the first driving mode (M1) is selected by the driving mode switching unit (21), a second brake determination threshold value (Bth2) is set when the second driving mode (M2) is selected by the driving mode switching unit (21), and the first brake determination threshold value (Bth1) is greater than the second brake determination threshold value (Bth2).

8. The vehicle control system (1) according to any one of claims 1 to 7, wherein the alarm control unit (54) is configured to change setting of the alarm determination threshold value (Ath) only when traction control in the traction control device (2) is operating.

9. The vehicle control system (1) according to any one of claims 1 to 7, wherein the alarm control unit (54) is configured to change setting of the alarm determination threshold value (Ath) only during an operation of the traction control in the traction control device (2) and until a predetermined time has elapsed after the operation.

## Patentansprüche

1. Fahrzeugsteuerungssystem (1), umfassend:
eine Traktionsteuerungsvorrichtung (2), welche eine Fahrmodus-Schalteinheit (21) umfasst, welche zu einem Auswählen eines aus einer Mehrzahl von Fahrmodi in der Lage ist, wobei, wenn eine Schlupfmenge (S), welche auf Grundlage einer Rotationsgeschwindigkeit eines Rads detektiert ist, einen Schlupfbestimmungsschwellenwert (Sth) überschreitet, welcher gemäß eines Fahrmodus durch die Fahrmodus-Schalteinheit (21) festgesetzt ist, die Traktionsteuerungsvorrichtung (2) den Schlupf durch ein Reduzieren eines Drehmoments einer Antriebsvorrichtung (3) des Fahrzeugs unterdrückt und/ oder eine Bremsvorrichtung (4) des Rads betätigt, um dadurch eine Traktion zu steuern; und
eine Kollisionsvermeidungs-Unterstützungsvorrichtung (5), umfassend eine Hindernisdetektionseinheit (51) für ein Detektieren eines Hindernisses, eine Berechnungseinheit (52) für ein Bestimmen einer Kollisionsvorhersagezeit (TTC), welche für das Fahrzeug benötigt wird, um mit dem Hindernis zu kollidieren, auf Grundlage einer relativen Distanz und einer relativen Geschwindigkeit zwischen dem Hindernis, welches durch die Hindernisdetektionseinheit (51) detektiert ist, und dem Fahrzeug, eine Warnungseinheit (53), welche zu einem Ausgeben einer Warnung für ein Benachrichtigen einer Möglichkeit eines Kollision mit dem Hindernis zu dem Fahrer des Fahrzeugs in der Lage ist, und eine Warnungssteuerungseinheit (54) für ein Verursachen, dass die Warnungseinheit (53) die Warnung ausgibt, wenn die Kollisionsvorhersagezeit (TTC), welche durch die Berechnungseinheit (52) bestimmt ist, gleich oder kleiner einem Warnungsbestimmungsschwellenwert (Ath) ist,
**dadurch gekennzeichnet, dass**
die Warnungssteuerungseinheit (54) dazu eingerichtet ist, zu einem Wechseln eines Einstellens des Warnungsbestimmungsschwellenwerts (Ath) zusammen mit einem Fahrmodus in der Lage zu sein, welcher durch die Fahrmodus-Schalteinheit (21) ausgewählt ist.

2. Fahrzeugsteuerungssystem (1) nach Anspruch 1,
wobei die Mehrzahl von Fahrmodi einen ersten Fahrmodus (M1) umfasst,
wobei, in der Traktionsteuerungsvorrichtung (2), ein erster Schlupfbestimmungsschwellenwert (Sth1) festgesetzt ist, wenn der erste Fahrmodus (M1) durch die Fahrmodus-Schalteinheit (21) ausgewählt ist, und der erste Schlupfbestimmungsschwellenwert (Sth1) kleiner als ein anderer Schlupfbestimmungsschwellenwert ist, welcher festgesetzt ist, wenn ein andere Fahrmodus durch die Fahrmodus-Schalteinheit (21) ausgewählt ist, und
wobei, in der Warnungssteuerungseinheit (54), ein erster Warnungsbestimmungsschwellenwert (Ath1) festgesetzt ist, wenn der erste Fahrmodus (M1) durch die Fahrmodus-Schalteinheit (21) ausgewählt ist, und der erste Warnungsbestimmungsschwellenwert (Ath1) größer als ein anderer Warnungsbestimmungsschwellenwert ist, welcher festgesetzt ist, wenn ein andere Fahrmodus durch die Fahrmodus-Schalteinheit (21) ausgewählt ist.

3. Fahrzeugsteuerungssystem (1) nach Anspruch 1,
wobei die Mehrzahl von Fahrmodi einen zweiten Fahrmodus (M2) umfasst,
wobei die Traktionsteuerungsvorrichtung (2) dazu eingerichtet ist, dass ein zweiter Schlupfbestimmungsschwellenwert (Sth2) festgesetzt ist, wenn der zweite Fahrmodus (M2) durch die Fahrmodus-Schalteinheit (21) ausgewählt ist, und, wenn die Schlupfmenge (S) den zweiten Schlupfbestimmungsschwellenwert (Sth2) überschreitet, eine Verringerung eines Drehmoments der Antriebsvorrichtung (3) unterdrückt oder verhindert ist und eine Bremskraft, welche auf ein Rad wirkt, erhöht ist, um eine Traktion anzupassen, und
wobei, in der Warnungssteuerungseinheit (54), ein zweiter Warnungsbestimmungsschwellenwert (Ath2) festgesetzt ist, wenn der zweite Fahrmodus (M2) durch die Fahrmodus-Schalteinheit (21) ausgewählt ist, und der zweite Warnungsbestimmungsschwellenwert (Ath2) größer als ein anderer Warnungsbestimmungsschwellenwert ist, welcher festgesetzt ist, wenn ein anderer Fahrmodus durch die Fahrmodus-Schalteinheit (21) ausgewählt ist.

4. Fahrzeugsteuerungssystem (1) nach Anspruch 1,
wobei die Mehrzahl von Fahrmodi einen ersten Fahrmodus (M1) und einen zweiten Fahrmodus (M2) umfasst, welcher sich von dem ersten Fahrmodus (M1) unterscheidet,
wobei die Traktionsteuerungsvorrichtung (2) dazu eingerichtet ist, dass ein erster Schlupfbestimmungsschwellenwert (Sth1) festgesetzt ist, wenn der erste Fahrmodus (M1) durch die Fahrmodus-Schalteinheit (21) ausgewählt ist, ein zweiter Schlupfbestimmungsschwellenwert (Sth2) festgesetzt ist, wenn der zweite Fahrmodus (M2) durch die Fahrmodus-Schalteinheit (21) ausgewählt ist, der erste Schlupfbestimmungsschwellenwert (Sth1) kleiner als der zweite Schlupfbestimmungsschwellenwert (Sth2) ist und, wenn die Schlupfmenge (S) den zweiten Schlupfbestimmungsschwellenwert (Sth2) überschreitet, eine Verringerung eines Drehmoments der Antriebsvorrichtung (3) unterdrückt oder verhindert ist und eine Bremskraft, welche auf das Rad wirkt, erhöht ist, um eine Traktion anzupassen, und
wobei, in der Warnungssteuerungseinheit (54), ein erster Warnungsbestimmungsschwellenwert (Ath1) festgesetzt ist, wenn der erste Fahrmodus (M1) durch die Fahrmodus-Schalteinheit (21) ausgewählt ist, und ein zweiter Warnungsbestimmungsschwellenwert (Ath2) festgesetzt ist, wenn der zweite Fahrmodus (M2) durch die Fahrmodus-Schalteinheit (21) ausgewählt ist.

5. Fahrzeugsteuerungssystem (1) nach Anspruch 4, wobei der erste Warnungsbestimmungsschwellenwert (Ath1) größer als der zweite Warnungsbestimmungsschwellenwert (Ath2) ist.

6. Fahrzeugsteuerungssystem (1) nach einem der Ansprüche 1 bis 5,
wobei die Kollisionsvermeidungs-Unterstützungsvorrichtung (5) eine Bremssteuerungseinheit (54) für ein Betätigen der Bremsvorrichtung (4) umfasst, wenn die Kollisionsvorhersagezeit (TTC), welche durch die Berechnungseinheit (52) bestimmt ist, gleich oder kleiner einem Bremsbestimmungsschwellenwert (Bth) ist,
wobei die Mehrzahl von Fahrmodi einen ersten Fahrmodus (M1) umfasst,
wobei, in der Traktionsteuerungsvorrichtung (2), ein erster Schlupfbestimmungsschwellenwert (Sth1) festgesetzt ist, wenn der erste Fahrmodus (M1) durch die Fahrmodus-Schalteinheit (21) ausgewählt ist, und der erste Schlupfbestimmungsschwellenwert (Sth1) geringer als ein anderer Schlupfbestimmungsschwellenwert ist, welcher festgesetzt ist, wenn ein andere Fahrmodus durch die Fahrmodus-Schalteinheit (21) ausgewählt ist, und
wobei, in der Bremssteuerungseinheit (54), ein erster Bremsbestimmungsschwellenwert (Bth1) festgesetzt ist, wenn der erste Fahrmodus (M1) durch die Fahrmodus-Schalteinheit (21) ausgewählt ist, und der erste Bremsbestimmungsschwellenwert (Bth1) größer als ein anderer Bremsbestimmungsschwellenwert ist, welcher festgesetzt ist, wenn ein anderer Fahrmodus durch die Fahrmodus-Schalteinheit (21) ausgewählt ist.

7. Fahrzeugsteuerungssystem (1) nach einem der Ansprüche 1 bis 5,
wobei die Kollisionsvermeidungs-Unterstützungsvorrichtung (5) eine Bremssteuerungseinheit (54) für ein Betätigen der Bremsvorrichtung (4) umfasst, wenn die Kollisionsvorhersagezeit (TTC), welche durch die Berechnungseinheit (52) bestimmt ist, gleich oder kleiner einem Bremsbestimmungsschwellenwert (Bth) ist,
wobei die Mehrzahl von Fahrmodi einen ersten Fahrmodus (M1) und einen zweiten Fahrmodus (M2) umfasst, welcher sich von dem ersten Fahrmodus (M1) unterscheidet,
wobei die Traktionsteuerungsvorrichtung (2) dazu eingerichtet ist, dass ein erster Schlupfbestimmungsschwellenwert (Sth1) festgesetzt ist, wenn der erste Fahrmodus (M1) durch die Fahrmodus-Schalteinheit (21) ausgewählt ist, ein zweiter Schlupfbestimmungsschwellenwert (Sth2) festgesetzt ist, wenn der zweite Fahrmodus (M2) durch die Fahrmodus-Schalteinheit (21) ausgewählt ist, der erste Schlupfbestimmungsschwellenwert (Sth1) kleiner als der zweite Schlupfbestimmungsschwellenwert (Sth2) ist und, wenn die Schlupfmenge (S) den zweiten Schlupfbestimmungsschwellenwert (Sth2) überschreitet, eine Verringerung eines Drehmoments der Antriebsvorrichtung (3) unterdrückt oder verhindert ist und eine Bremskraft, welche auf das Rad wirkt, erhöht ist, um eine Traktion anzupassen, und
wobei, in der Bremssteuerungseinheit (54), ein erster Bremsbestimmungsschwellenwert (Bth1) festgesetzt ist, wenn der erste Fahrmodus (M1) durch die Fahrmodus-Schalteinheit (21) ausgewählt ist, ein zweiter Bremsbestimmungsschwellenwert (Bth2) festgesetzt ist, wenn der zweite Fahrmodus (M2) durch die Fahrmodus-Schalteinheit (21) ausgewählt ist, und der erster Bremsbestimmungsschwellenwert (Bth1) größer als der zweite Bremsbestimmungsschwellenwert (Bth2) ist.

8. Fahrzeugsteuerungssystem (1) nach einem der Ansprüche 1 bis 7, wobei die Warnungssteuerungseinheit (54) dazu eingerichtet ist, eine Einstellung des Warnungsbestimmungsschwellenwerts (Ath) nur zu ändern, wenn eine Traktionsteuerung in der Traktionsteuerungsvorrichtung (2) arbeitet.

9. Fahrzeugsteuerungssystem (1) nach einem der Ansprüche 1 bis 7, wobei die Warnungssteuerungseinheit (54) dazu eingerichtet ist, eine Einstellung des Warnungsbestimmungsschwellenwerts (Ath) zu ändern, nur während eines Arbeitens der Traktionsteuerung in der Traktionsteuerungsvorrichtung (2) und bis eine vorbestimmte Zeit nach dem Arbeiten verstrichen ist.

## Revendications

1. Système de commande de véhicule (1) comprenant :
un dispositif de commande de traction (2) comportant une unité de commutation de mode de conduite (21) capable de sélectionner l'un d'une pluralité de modes de conduite, dans lequel lorsqu'une quantité de patinage (S) détectée sur la base d'une vitesse de rotation d'une roue dépasse une valeur de seuil de détermination de patinage (Sth) réglée conformément à un mode de conduite sélectionné par l'unité de commutation de mode de conduite (21), le dispositif de commande de traction (2) supprime le patinage en réduisant un couple d'un dispositif de conduite (3) du véhicule et/ou en actionnant un dispositif de frein (4) de la roue, commandant ainsi la traction ; et
un dispositif de prise en charge d'évitement de collision (5) comportant une unité de détection d'obstacle (51) pour détecter un obstacle, une unité de calcul (52) pour déterminer un temps de prédiction de collision (TTC) nécessaire pour que le véhicule entre en collision avec l'obstacle sur la base d'une distance relative et d'une vitesse relative entre l'obstacle détecté par l'unité de détection d'obstacle (51) et le véhicule, une unité d'alarme (53) capable d'émettre une alarme pour notifier une possibilité d'une collision avec l'obstacle à un conducteur du véhicule, et une unité de commande d'alarme (54) pour amener l'unité d'alarme (53) à émettre l'alarme lorsque le temps de prédiction de collision (TTC) déterminé par l'unité de calcul (52) est égal ou inférieur à une valeur de seuil de détermination d'alarme (Ath), **caractérisé en ce que**
l'unité de commande d'alarme (54) est configurée pour être capable de changer un réglage de la valeur de seuil de détermination d'alarme (Ath) conjointement avec un mode de conduite sélectionné par l'unité de commutation de mode de conduite (21).

2. Système de commande de véhicule (1) selon la revendication 1,
dans lequel la pluralité de modes de conduite comporte un premier mode de conduite (M1),
dans lequel dans le dispositif de commande de traction (2), une première valeur de seuil de détermination de patinage (Sth1) est réglée lorsque le premier mode de conduite (M1) est sélectionné par l'unité de commutation de mode de conduite (21), et la première valeur de seuil de détermination de patinage (Sth1) est inférieure à une autre valeur de seuil de détermination de patinage qui est réglée lorsqu'un autre mode de conduite est sélectionné par l'unité de commutation de mode de conduite (21), et
dans lequel dans l'unité de commande d'alarme (54), une première valeur de seuil de détermination d'alarme (Ath1) est réglée lorsque le premier mode de conduite (M1) est sélectionné par l'unité de commutation de mode de conduite (21), et la première valeur de seuil de détermination d'alarme (Ath1) est supérieure à une autre valeur de seuil de détermination d'alarme qui est réglée lorsqu'un autre mode de conduite est sélectionné par l'unité de commutation de mode de conduite (21).

3. Système de commande de véhicule (1) selon la revendication 1,
dans lequel la pluralité de modes de conduite comporte un second mode de conduite (M2),
dans lequel le dispositif de commande de traction (2) est configuré de façon à ce qu'une seconde valeur de seuil de détermination de patinage (Sth2) soit réglée lorsque le second mode de conduite (M2) est sélectionné par l'unité de commutation de mode de conduite (21), et que lorsque la quantité de patinage (S) dépasse la seconde valeur de seuil de détermination de patinage (Sth2), une réduction d'un couple du dispositif de conduite (3) soit supprimée ou interdite, et qu'une force de freinage agissant sur la roue soit augmentée pour ajuster la traction, et
dans lequel dans l'unité de commande d'alarme (54), une seconde valeur de seuil de détermination d'alarme (Ath2) est réglée lorsque le second mode de conduite (M2) est sélectionné par l'unité de commutation de mode de conduite (21), et la seconde valeur de seuil de détermination d'alarme (Ath2) est supérieure à une autre valeur de seuil de détermination d'alarme qui est réglée lorsqu'un autre mode de conduite est sélectionné par l'unité de commutation de mode de conduite (21).

4. Système de commande de véhicule (1) selon la revendication 1,
dans lequel la pluralité de modes de conduite comporte un premier mode de conduite (M1) et un second mode de conduite (M2) différent du premier mode de conduite (M1),
dans lequel le dispositif de commande de traction (2) est configuré de façon à ce qu'une première valeur de seuil de détermination de patinage (Sth1) soit réglée lorsque le premier mode de conduite (M1) est sélectionné par l'unité de commutation de mode de conduite (21), qu'une seconde valeur de seuil de détermination de patinage (Sth2) soit réglée lorsque le second mode de conduite (M2) est sélectionné par l'unité de commutation de mode de conduite (21), que la première valeur de seuil de détermination de patinage (Sth1) soit inférieure à la seconde valeur de seuil de détermination de patinage (Sth2), et que lorsque la quantité de patinage (S) dépasse la seconde valeur de seuil de détermination de patinage (Sth2), une réduction d'un couple du dispositif de conduite (3) soit supprimée ou interdite, et qu'une force de freinage agissant sur la roue soit augmentée pour ajuster la traction, et
dans lequel dans l'unité de commande d'alarme (54), une première valeur de seuil de détermination d'alarme (Ath1) est réglée lorsque le premier mode de conduite (M1) est sélectionné par l'unité de commutation de mode de conduite (21), et une seconde valeur de seuil de détermination d'alarme (Ath2) est réglée lorsque le second mode de conduite (M2) est sélectionné par l'unité de commutation de mode de conduite (21).

5. Système de commande de véhicule (1) selon la revendication 4, dans lequel la première valeur de seuil de détermination d'alarme (Ath1) est supérieure à la seconde valeur de seuil de détermination d'alarme (Ath2).

6. Système de commande de véhicule (1) selon l'une quelconque des revendications 1 à 5,
dans lequel le dispositif de prise en charge d'évitement de collision (5) comprend une unité de commande de frein (54) pour actionner le dispositif de frein (4) lorsque le temps de prédiction de collision (TTC) déterminé par l'unité de calcul (52) est égal ou inférieur à une valeur de seuil de détermination de frein (Bth),
dans lequel la pluralité de modes de conduite comporte un premier mode de conduite (M1),
dans lequel dans le dispositif de commande de traction (2), une première valeur de seuil de détermination de patinage (Sth1) est réglée lorsque le premier mode de conduite (M1) est sélectionné par l'unité de commutation de mode de conduite (21), et la première valeur de seuil de détermination de patinage (Sth1) est inférieure à une autre valeur de seuil de détermination de patinage qui est réglée lorsqu'un autre mode de conduite est sélectionné par l'unité de commutation de mode de conduite (21), et
dans lequel dans l'unité de commande de frein (54), une première valeur de seuil de détermination de frein (Bth1) est réglée lorsque le premier mode de conduite (M1) est sélectionné par l'unité de commutation de mode de conduite (21), et la première valeur de seuil de détermination de frein (Bth1) est supérieure à une autre valeur de seuil de détermination de frein qui est réglée lorsqu'un autre mode de conduite est sélectionné par l'unité de commutation de mode de conduite (21).

7. Système de commande de véhicule (1) selon l'une quelconque des revendications 1 à 5,
dans lequel le dispositif de prise en charge d'évitement de collision (5) comprend une unité de commande de frein (54) pour actionner le dispositif de frein (4) lorsque le temps de prédiction de collision (TTC) déterminé par l'unité de calcul (52) est égal ou inférieur à une valeur de seuil de détermination de frein (Bth),
dans lequel la pluralité de modes de conduite comporte un premier mode de conduite (M1) et un second mode de conduite (M2) différent du premier mode de conduite (M1),
dans lequel le dispositif de commande de traction (2) est configuré de façon à ce qu'une première valeur de seuil de détermination de patinage (Sth1) soit réglée lorsque le premier mode de conduite (M1) est sélectionné par l'unité de commutation de mode de conduite (21), qu'une seconde valeur de seuil de détermination de patinage (Sth2) soit réglée lorsque le second mode de conduite (M2) est sélectionné par l'unité de commutation de mode de conduite (21), que la première valeur de seuil de détermination de patinage (Sth1) soit inférieure à la seconde valeur de seuil de détermination de patinage (Sth2), et que lorsque la quantité de patinage (S) dépasse la seconde valeur de seuil de détermination de patinage (Sth2), une réduction d'un couple du dispositif de conduite (3) soit supprimée ou interdite, et qu'une force de freinage agissant sur la roue soit augmentée pour ajuster la traction, et
dans lequel dans l'unité de commande de frein (54), une première valeur de seuil de détermination de frein (Bth1) est réglée lorsque le premier mode de conduite (M1) est sélectionné par l'unité de commutation de mode de conduite (21), une seconde valeur de seuil de détermination de frein (Bth2) est réglée lorsque le second mode de conduite (M2) est sélectionné par l'unité de commutation de mode de conduite (21), et la première valeur de seuil de détermination de frein (Bth1) est supérieure à la seconde valeur de seuil de détermination de frein (Bth2).

8. Système de commande de véhicule (1) selon l'une quelconque des revendications 1 à 7, dans lequel l'unité de commande d'alarme (54) est configurée pour changer un réglage de la valeur de seuil de détermination d'alarme (Ath) uniquement lorsque la commande de traction dans le dispositif de commande de traction (2) est en fonctionnement.

9. Système de commande de véhicule (1) selon l'une quelconque des revendications 1 à 7, dans lequel l'unité de commande d'alarme (54) est configurée pour changer un réglage de la valeur de seuil de détermination d'alarme (Ath) uniquement durant un fonctionnement de la commande de traction dans le dispositif de commande de traction (2) et jusqu'à ce qu'un temps prédéterminé se soit écoulé après le fonctionnement.
